# EUROPÄISCHE PATENTSCHRIFT

(11) **EP 3 596 375 B1**
(45) Veröffentlichungstag und Bekanntmachung des Hinweises auf die Patenterteilung: **29.12.2021**
(21) Anmeldenummer: 18705116.4
(22) Anmeldetag: 07.02.2018
(51) Int. Cl.: F16L 11/11, F16L 11/12, H02G 3/04

(54) **VERBUNDSCHLAUCH**
COMPOSITE TUBE
TUYAU FLEXIBLE COMPOSITE

(30) Priorität: 17.03.2017 DE 102017105787
(43) Veröffentlichungstag der Anmeldung: 22.01.2020
(73) Patentinhaber: Delfingen FR-Anteuil S.A., 25340 Anteuil (FR)
(72) Erfinder: CHU, Van Ngoc, 85586 Poing (DE)
(74) Vertreter: Horn Kleimann Waitzhofer Patentanwälte PartG mbB
(86) Internationale Anmeldenummer: PCT/EP2018/053110
(87) Internationale Veröffentlichungsnummer: WO 2018/166723

(56) Entgegenhaltungen:
- EP-A1- 3 125 383
- DE-A1-102005 060 221
- DE-A1-102015 104 256

## Beschreibung

Die vorliegende Erfindung betrifft einen Verbundschlauch, insbesondere einen Wellschlauch.

Wellschläuche oder Wellrohre können insbesondere im Automobilbau als Schutzrohre für Kabel, wie beispielsweise elektrische Leitungen, eingesetzt werden. Hierbei werden die Kabel zur Montage in den Wellschlauch eingezogen, eingeschoben oder eingelegt.

Die DE 10 2015 104 256 A1 beschreibt ein Wellrohr aus Kunststoff zum Ummanteln von Leitungen. Das Wellrohr umfasst entlang seines Außenumfangs eine Wellung mit radial vorragenden Bereichen und mit bezüglich der radial vorragenden Bereiche nach innen versetzt liegenden Bereichen. Die radial vorragenden Bereiche bestehen dabei aus einem härteren Kunststoffmaterial als die radial nach innen versetzten Bereiche. Mit Hilfe des weicheren Kunststoffmaterials kann die Flexibilität des Wellrohrs eingestellt werden und mit Hilfe des härteren Kunststoffmaterials können die Verschleißeigenschaften desselben eingestellt werden. Die verwendeten Kunststoffmaterialien müssen dabei derart ausgewählt werden, dass diese geeignet sind, miteinander chemische und/oder physikalische Wechselwirkungen auszubilden, so dass sich das weichere Kunststoffmaterial mit dem härteren Kunststoffmaterial verbindet.

Die EP 3 125 383 A1 zeigt einen aufklappbaren Wellschlauch zum Aufnehmen von Leitungen mit einer ersten Wellschlauchschale, einer zweiten Wellschlauchschale, einem Gelenkabschnitt, an dem die erste Wellschlauchschale und die zweite Wellschlauchschale jeweils an einem ersten Endabschnitt verschwenkbar miteinander verbunden sind, und einem Lippenabschnitt, der an einem zweiten Endabschnitt zumindest einer der Wellschlauchschalen vorgesehen ist, wobei der Lippenabschnitt aus einem anderen Material als die Wellschlauchschalen gefertigt ist.

Die DE 10 2005 060 221 A1 beschreibt einen Schlauch mit einem einschichtigen oder mehrschichtigen Aufbau zur Durchleitung von flüssigen oder gasförmigen Medien.

Vor diesem Hintergrund besteht eine Aufgabe der vorliegenden Erfindung darin, einen verbesserten Verbundschlauch zur Verfügung zu stellen.

Demgemäß wird ein Verbundschlauch, insbesondere ein Wellschlauch, vorgeschlagen. Der Verbundschlauch umfasst einen ersten Wandabschnitt, der aus einem ersten Kunststoffmaterial gefertigt ist, einen zweiten Wandabschnitt, der aus einem sich von dem ersten Kunststoffmaterial unterscheidenden zweiten Kunststoffmaterial gefertigt ist, und einen dritten Wandabschnitt, der aus einem sich von dem ersten Kunststoffmaterial und dem zweiten Kunststoffmaterial unterscheidenden dritten Kunststoffmaterial gefertigt ist. Der erste Wandabschnitt, der zweite Wandabschnitt und der dritte Wandabschnitt sind in einer Umfangsrichtung des Verbundschlauchs nebeneinander angeordnet, wobei der dritte Wandabschnitt zwischen dem ersten Wandabschnitt und dem zweiten Wandabschnitt angeordnet ist und den ersten Wandabschnitt mit dem zweiten Wandabschnitt verbindet. Dabei erstrecken sich der erste Wandabschnitt, der zweite Wandabschnitt und der dritte Wandabschnitt in einer Radialrichtung des Verbundschlauchs jeweils über eine gesamte Wandstärke desselben.

Dadurch, dass der dritte Wandabschnitt vorgesehen ist, ist es möglich, den ersten Wandabschnitt und den zweiten Wandabschnitt aus zwei Kunststoffmaterialien zu fertigen, die direkt nicht miteinander verbindbar sind. Hierdurch ergeben sich große Variationsmöglichkeiten bei der Auswahl des ersten Kunststoffmaterials und des zweiten Kunststoffmaterials, wodurch die mechanischen Eigenschaften und/oder die Verschleißeigenschaften des Verbundschlauchs in weiten Bereichen einstellbar sind. Hierdurch kann das Einsatzgebiet des Verbundschlauchs im Vergleich zu bekannten Verbundschläuchen signifikant vergrößert werden.

Vorzugsweise ist der erste Wandabschnitt stoffschlüssig mit dem dritten Wandabschnitt verbunden und der dritte Wandabschnitt ist stoffschlüssig mit dem zweiten Wandabschnitt verbunden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel, in diesem Fall des dritten Wandabschnitts, und/oder der Verbindungspartner, in diesem Fall des ersten Wandabschnitts und des zweiten Wandabschnitts, voneinander trennen lassen.

Vorzugsweise ist der Verbundschlauch mit Hilfe eines Mehrkomponenten-Extrusionsverfahrens hergestellt. Bei der Fertigung des Verbundschlauchs kann das erste Kunststoffmaterial, das auch als Hauptmaterial bezeichnet werden kann, mit einem Hauptextruder extrudiert werden. Das zweite Kunststoffmaterial kann dem Hauptextruder mit Hilfe eines ersten Beispritzextruders zugeführt werden. Das dritte Kunststoffmaterial wird dem Hauptextruder beispielsweise mit Hilfe eines zweiten Beispritzextruders zugeführt. Der Verbundschlauch kann auch mehr als drei Kunststoffmaterialien aufweisen. Beispielsweise kann der Verbundschlauch vier oder fünf unterschiedliche Kunststoffmaterialien aufweisen. Für die weiteren Kunststoffmaterialien können weitere Beispritzextruder bereitgestellt werden.

Die Radialrichtung ist vorzugsweise von einer Mittel- oder Symmetrieachse des Verbundschlauchs in Richtung einer Innenwandung desselben orientiert. Die Umfangsrichtung kann im oder entgegen dem Uhrzeigersinn orientiert sein. Die Umfangsrichtung ist vorzugsweise parallel zu einer vorzugsweise kreisförmigen Innenwandung des Verbundschlauchs orientiert. Darunter, dass der erste Wandabschnitt, der zweite Wandabschnitt und der dritte Wandabschnitt in der Umfangsrichtung nebeneinander angeordnet sind, ist zu verstehen, dass in der Umfangsrichtung betrachtet sich jeweils ein erster Wandabschnitt mit einem zweiten Wandabschnitt abwechselt, wobei zwischen jedem ersten Wandabschnitt und jedem zweiten Wandabschnitt ein dritter Wandabschnitt angeordnet ist.

Darunter, dass sich der erste Wandabschnitt, der zweite Wandabschnitt und der dritte Wandabschnitt in der Radialrichtung jeweils über die gesamte Wandstärke des Verbundschlauchs erstrecken, ist zu verstehen, dass in der Radialrichtung betrachtet das erste Kunststoffmaterial, das zweite Kunststoffmaterial und das dritte Kunststoffmaterial idealerweise nicht übereinander sondern nur nebeneinander angeordnet sind. Das heißt, in der Radialrichtung betrachtet ist der erste Wandabschnitt materialeinstückig aus dem ersten Kunststoffmaterial gefertigt, der zweite Wandabschnitt ist materialeinstückig aus dem zweiten Kunststoffmaterial gefertigt und der dritte Wandabschnitt materialeinstückig aus dem dritten Kunststoffmaterial gefertigt. Das heißt, der erste Wandabschnitt ist frei von dem zweiten Kunststoffmaterial und dem dritten Kunststoffmaterial, der zweite Wandabschnitt ist frei von dem ersten Kunststoffmaterial und dem dritten Kunststoffmaterial und der dritte Wandabschnitt ist frei von dem ersten Kunststoffmaterial und dem zweiten Kunststoffmaterial.

Darunter, dass sich der erste Wandabschnitt, der zweite Wandabschnitt und der dritte Wandabschnitt in der Radialrichtung jeweils über die gesamte Wandstärke des Verbundschlauchs erstrecken, kann jedoch auch zu verstehen sein, dass in der Radialrichtung betrachtet eine sehr dünne, insbesondere folienartige Schicht, des dritten Kunststoffmaterials auf und/oder unter dem zweiten Kunststoffmaterial und/oder auf und/oder unter dem dritten Kunststoffmaterial angeordnet ist. Das heißt, in der Radialrichtung betrachtet kann der dritte Wandabschnitt zumindest abschnittsweise über und/oder unter dem ersten Wandabschnitt und/oder über und/oder unter dem zweiten Wandabschnitt angeordnet sein. Fertigungstechnisch ist es möglich, dass sich diese sehr dünne Schicht des dritten Kunststoffmaterials bildet. Der dritte Wandabschnitt kann dann im Querschnitt eine T-förmige oder eine doppel-T-förmige beziehungsweise I-förmige Geometrie aufweisen. Vorzugsweise umgibt der dritte Wandabschnitt den ersten Wandabschnitt und/oder den zweiten Wandabschnitt jedoch nicht vollständig. Insbesondere sind der erste Wandabschnitt, der zweite Wandabschnitt und der dritte Wandabschnitt in der Umfangsrichtung des Verbundschlauchs betrachtet zumindest abschnittsweise nebeneinander angeordnet.

Gemäß einer Ausführungsform umfasst der Verbundschlauch ferner eine Vielzahl an ersten Wandabschnitten, zweiten Wandabschnitten und dritten Wandabschnitten, wobei jeder erste Wandabschnitt zwischen zwei dritten Wandabschnitten sowie jeder zweite Wandabschnitt zwischen zwei dritten Wandabschnitten angeordnet ist.

Die Anzahl der ersten Wandabschnitte, der zweiten Wandabschnitte und der dritten Wandabschnitte ist beliebig. Vorzugsweise entspricht die Anzahl der ersten Wandabschnitte der Anzahl der zweiten Wandabschnitte. Die Anzahl der dritten Wandabschnitte ist vorzugsweise doppelt so groß wie die Anzahl der ersten Wandabschnitte oder der zweiten Wandabschnitte. Beispielsweise sind jeweils zwölf erste Wandabschnitte und zwölf zweite Wandabschnitte sowie vierundzwanzig dritte Wandabschnitte vorgesehen. Jeder erste Wandabschnitt ist beidseitig von zwei dritten Wandabschnitten eingeschlossen und jeder zweite Wandabschnitt ist ebenfalls beidseits von zwei dritten Wandabschnitten eingeschlossen. In der Radialrichtung betrachtet weist der erste Wandabschnitt vorzugsweise eine keilförmige Geometrie auf. Das heißt, der Querschnitt des ersten Wandabschnitts vergrößert sich ausgehend von der Symmetrieachse in der Radialrichtung betrachtet. Der zweite Wandabschnitt weist in der Radialrichtung betrachtet vorzugsweise eine Breite auf. Der zweite Wandabschnitt kann im Querschnitt vieleckig sein. Der zweite Wandabschnitt kann im Querschnitt jedoch eine beliebige Geometrie aufweisen. Beispielsweise kann der zweite Wandabschnitt im Querschnitt auch zickzackförmig sein. Der dritte Wandabschnitt weist in der Radialrichtung betrachtet vorzugsweise wie der zweite Wandabschnitt ebenfalls eine Breite auf. Der dritte Wandabschnitt kann, wie der zweite Wandabschnitt, im Querschnitt eine beliebige Geometrie aufweisen.

Gemäß einer weiteren Ausführungsform erstrecken sich der erste Wandabschnitt, der zweite Wandabschnitt und der dritte Wandabschnitt in einer Längsrichtung des Verbundschlauchs und sind parallel zueinander angeordnet.

Die Längsrichtung ist parallel zu der Symmetrieachse orientiert. Die Radialrichtung ist senkrecht zu der Längsrichtung positioniert. Der erste Wandabschnitt, der zweite Wandabschnitt und der dritte Wandabschnitt bilden so in der Längsrichtung beziehungsweise in einer Axialrichtung des Verbundschlauchs verlaufende nebeneinander angeordnete Kunststoffstreifen.

Gemäß einer weiteren Ausführungsform weist das zweite Kunststoffmaterial sich von dem ersten Kunststoffmaterial unterscheidende Eigenschaften auf.

Insbesondere ist das zweite Kunststoffmaterial weicher als das erste Kunststoffmaterial. Hierdurch kann die Flexibilität des Verbundschlauchs bei hoher Verschleißfestigkeit erhöht werden. Dies erweitert den Einsatzbereich des Verbundschlauchs. Die sich unterscheidenden Eigenschaften können jedoch auch lediglich unterschiedliche Farben sein. Die sich unterscheidenden Eigenschaften können auch unterschiedliche mechanische Eigenschaften sein.

Gemäß einer weiteren Ausführungsform fungiert das dritte Kunststoffmaterial als Haftvermittler zwischen dem ersten Kunststoffmaterial und dem zweiten Kunststoffmaterial.

Mit Hilfe eines Haftvermittlers können zwei nicht miteinander vermischbare, schwer miteinander vermischbare und/oder nicht miteinander verbindbare Kunststoffmaterialien miteinander verbunden werden. Dies ermöglicht eine freie Materialauswahl für das erste Kunststoffmaterial und das zweite Kunststoffmaterial.

Gemäß einer weiteren Ausführungsform ist das erste Kunststoffmaterial ein Polyamid, das zweite Kunststoffmaterial ein thermoplastisches Elastomer oder ein Ethylen-Tetrafluorethylen-Copolymer und das dritte Kunststoffmaterial ein modifiziertes Polyolefin.

Das erste Kunststoffmaterial, das zweite Kunststoffmaterial und das dritte Kunststoffmaterial können allerdings auch beliebige andere Kunststoffmaterialien sein. Zum Herstellen eines modifizierten Polyolefins wird ein vorher unlösliches Polyolefin chemisch derart modifiziert, dass dieses in organischen Lösungsmitteln löslich ist. Hierdurch ist das modifizierte Polyolefin dazu geeignet, nicht direkt miteinander verbindbare Kunststoffmaterialien miteinander zu verbinden.

Gemäß einer weiteren Ausführungsform umfasst der Verbundschlauch ferner sich in einer Längsrichtung des Verbundschlauchs abwechselnde Wellentäler und Wellenberge.

Die Wellenberge und Wellentäler sind in der Längsrichtung gleichmäßig voneinander beabstandet positioniert. Die Wellentäler und Wellenberge sind so angeordnet, dass zwischen zwei Wellentälern jeweils ein Wellenberg und zwischen zwei Wellenbergen jeweils ein Wellental angeordnet ist.

Gemäß einer weiteren Ausführungsform erstreckt sich der erste Wandabschnitt in der Radialrichtung über den zweiten Wandabschnitt heraus.

Insbesondere bilden die ersten Wandabschnitte und die zweiten Wandabschnitte eine in Umfangsrichtung des Verbundschlauchs umlaufende außenseitige Wellung. Dadurch, dass sich die aus dem härteren ersten Kunststoffmaterial gefertigten ersten Wandabschnitte in der Radialrichtung über die aus dem weicheren zweiten Kunststoffmaterial gefertigten Wandabschnitte heraus erstrecken, wird ein Verschleiß der zweiten Wandabschnitte verhindert. Mit Hilfe der Materialeigenschaften des zweiten Kunststoffmaterials der zweiten Wandabschnitte kann die Flexibilität des Verbundschlauchs eingestellt werden. Vorzugsweise weist das erste Kunststoffmaterial eine Shore-D-Härte in einem Bereich von bevorzugt 40 bis 90 auf und das zweite Kunststoffmaterial weist eine Shore-A-Härte in einem Bereich von bevorzugt 10 bis 70 auf. Die Shore-Härte ist ein Werkstoffkennwert für elastomere Kunststoffe und ist in den Normen DIN EN ISO 868 und DIN ISO 7619-1 festgelegt.

Gemäß einer weiteren Ausführungsform weist der erste Wandabschnitt eine erste Wellschlauchschale, eine zweite Wellschlauchschale und einen Gelenkabschnitt auf, an dem die erste Wellschlauchschale und die zweite Wellschlauchschale verschwenkbar miteinander verbunden sind, wobei der zweite Wandabschnitte eine elastisch verformbare Verschlusslippe bildet.

Vorzugsweise ist der Verbundschlauch von einem geöffneten oder aufgeklappten Zustand, in dem die erste Wellschlauchschale und die zweite Wellschlauchschale bevorzugt nebeneinander angeordnet sind, in einen geschlossenen oder zusammengeklappten Zustand verbringbar, in dem die zweite Wellschlauchschale zumindest abschnittsweise innerhalb der ersten Wellschlauchschale angeordnet ist. Zum Bilden eines Kabelbaums können Kabel in den geöffneten Verbundschlauch eingelegt werden, welcher nach dem Einlegen der Kabel verschlossen wird. Hierdurch ist ein Hindurchschieben oder Hindurchziehen der Kabel durch den Verbundschlauch verzichtbar. Vorzugsweise sind die erste Wellschlauchschale, die zweite Wellschlauchschale und der Gelenkabschnitt materialeinstückig ausgebildet. Der zweite Wandabschnitt kann auch als Verschlusslippe bezeichnet werden. Mit Hilfe der Verschlusslippe kann eine Beschädigung der Kabel beim Einlegen in den Verbundschlauch und im Betrieb des Verbundschlauchs verhindert werden, da das weichere zweite Kunststoffmaterial die Kabel nicht beschädigt. Alternativ kann der Gelenkabschnitt auch aus einem anderen Kunststoffmaterial gefertigt sein als die Wellschlauchschalen. Beispielsweise können die Wellschlauchschalen aus dem ersten Kunststoffmaterial und der Gelenkabschnitt kann aus dem zweiten Kunststoffmaterial gefertigt sein. Der Gelenkabschnitt ist dann ein zweiter Wandabschnitt des Verbundschlauchs. Zwischen dem Gelenkabschnitt und den Wellschlauchschalen kann dann jeweils ein dritter Wandabschnitt vorgesehen sein, der aus dem dritten Kunststoffmaterial gefertigt ist.

Gemäß einer weiteren Ausführungsform weist der zweite Wandabschnitt einen an der ersten Wellschlauchschale vorgesehenen ersten Lippenabschnitt und einen von dem ersten Lippenabschnitt getrennten zweiten Lippenabschnitt auf, der an der zweiten Wellschlauchschale vorgesehen ist.

Alternativ kann auch an nur einer der Wellschlauchschalen ein derartiger Lippenabschnitt vorgesehen sein. Zwischen der ersten Wellschlauchschale und dem ersten Lippenabschnitt ist der dritte Wandabschnitt vorgesehen und zwischen dem zweiten Lippenabschnitt und der zweiten Wellschlauchschale ist ein weiterer dritter Wandabschnitt vorgesehen. Darunter, dass der zweite Lippenabschnitt von dem ersten Lippenabschnitt getrennt ist, ist zu verstehen, dass zwischen dem ersten Lippenabschnitt und dem zweiten Lippenabschnitt ein Schlitz vorgesehen ist. Der Schlitz kann beispielsweise mit Hilfe einer Schneideinrichtung nach oder beim Extrudieren des Verbundschlauchs in diesen eingebracht werden.

Weitere mögliche Implementierungen des Verbundschlauchs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Verbundschlauchs hinzufügen.

Weitere vorteilhafte Ausgestaltungen oder Aspekte des Verbundschlauchs sind Gegenstand der Unteransprüche sowie der im Folgenden beschriebenen Ausführungsbeispiele des Verbundschlauchs. Im Weiteren wird der Verbundschlauch anhand von bevorzugten Ausführungsformen unter Bezugnahme auf die beigelegten Figuren näher erläutert.
Fig. 1 zeigt eine schematische perspektivische Ansicht einer Ausführungsform eines Verbundschlauchs;
Fig. 2 zeigt eine schematische Seitenansicht des Verbundschlauchs gemäß Fig. 1;
Fig. 3 zeigt eine schematische Vorderansicht eines Kabelbaums mit einem Verbundschlauch gemäß Fig. 1;
Fig. 4 zeigt die Detailansicht IV gemäß Fig. 3;
Fig. 5 zeigt eine schematische perspektivische Ansicht einer weiteren Ausführungsform eines Verbundschlauchs;
Fig. 6 zeigt eine weitere schematische perspektivische Ansicht des Verbundschlauchs gemäß Fig. 5;
Fig. 7 zeigt eine schematische Seitenansicht des Verbundschlauchs gemäß Fig. 5;
Fig. 8 zeigt eine schematische Vorderansicht des Verbundschlauchs gemäß Fig. 5;
Fig. 9 zeigt eine schematische Vorderansicht eines Kabelbaums mit einem Verbundschlauch gemäß Fig. 5; und
Fig. 10 zeigt die Detailansicht X gemäß Fig. 8.

In den Figuren sind gleiche oder funktionsgleiche Elemente mit denselben Bezugszeichen versehen worden, sofern nichts anderes angegeben ist.

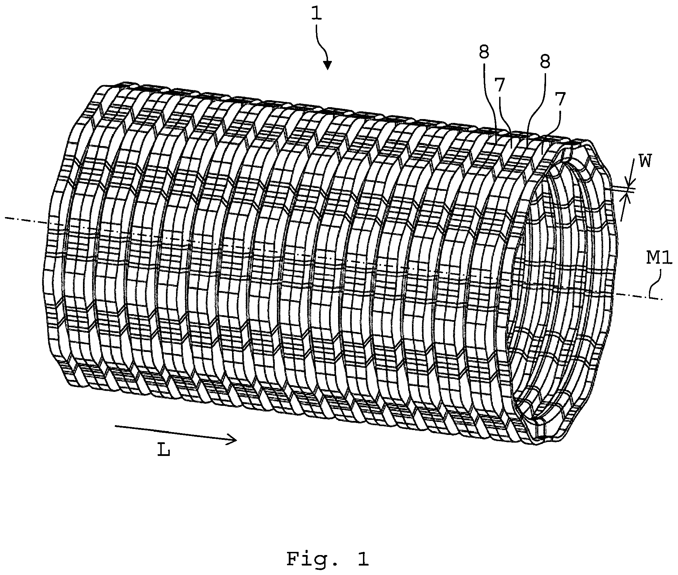

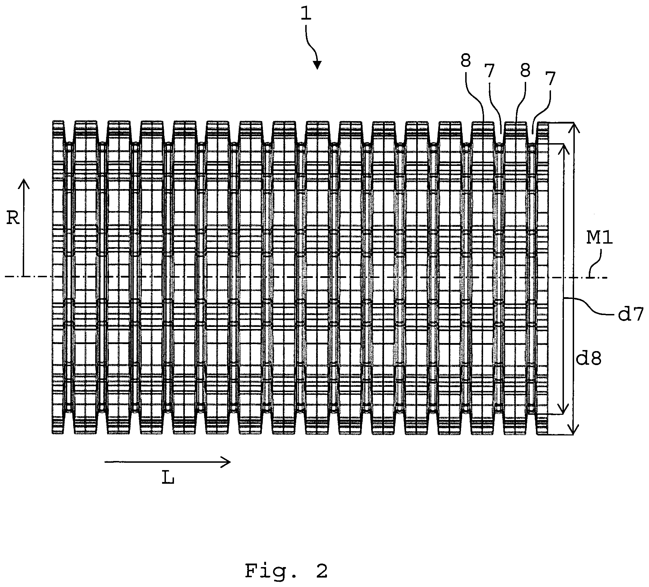

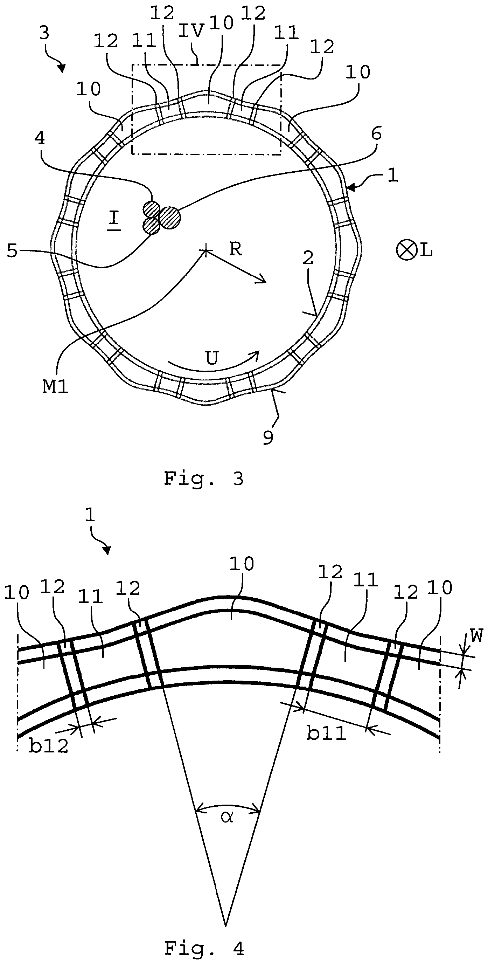

Die Fig. 1 zeigt eine schematische perspektivische Ansicht einer Ausführungsform eines Verbundschlauchs 1. Die Fig. 2 zeigt eine schematische Seitenansicht des Verbundschlauchs 1, die Fig. 3 zeigt eine schematische Vorderansicht des Verbundschlauchs 1 und die Fig. 4 zeigt die Detailansicht IV gemäß der Fig. 3. Im Folgenden wird auf die Fig. 1 bis 4 gleichzeitig Bezug genommen.

Der Verbundschlauch 1 kann auch als Verbundrohr bezeichnet werden. Der Verbundschlauch 1 wird als Verbundschlauch bezeichnet, da dieser aus miteinander verbundenen unterschiedlichen Kunststoffmaterialien gefertigt ist. Der Verbundschlauch 1 ist insbesondere ein Wellschlauch oder Wellrohr beziehungsweise kann auch als Wellschlauch oder Wellrohr bezeichnet werden. Die Kunststoffmaterialien unterscheiden sich bevorzugt chemisch voneinander.

Der Verbundschlauch 1 kann rotationssymmetrisch zu einer Mittel- oder Symmetrieachse M1 ausgebildet sein. Der Verbundschlauch 1 umfasst eine Längsrichtung L. Die Längsrichtung L ist parallel zu der Symmetrieachse M1 orientiert. Die Längsrichtung L kann in der Orientierung der Fig. 1 und 2 von links nach rechts oder von rechts nach links orientiert sein. In den Fig. 1 und 2 ist die Längsrichtung L von links nach rechts orientiert. Die Längsrichtung L kann aber auch umgekehrt orientiert sein. Der Verbundschlauch 1 umfasst weiterhin eine Radialrichtung R, die von der Symmetrieachse M1 weg orientiert ist. Die Radialrichtung R ist senkrecht zu der Symmetrieachse M1 positioniert. Insbesondere ist die Radialrichtung R von der Symmetrieachse M1 weg auf eine Innenwandung 2 des Verbundschlauchs 1 hinzu orientiert.

Weiterhin umfasst der Verbundschlauch 1 eine Umfangsrichtung U, die im Uhrzeigersinn oder entgegen dem Uhrzeigersinn orientiert sein kann. Wie die Fig. 3 zeigt, kann die Umfangsrichtung U entgegen dem Uhrzeigersinn orientiert sein. Die Umfangsrichtung U ist vorzugsweise parallel zu der Innenwandung 2 orientiert. Die Umfangsrichtung U kann auch als umfängliche Richtung des Verbundschlauchs 1 bezeichnet werden.

Der Verbundschlauch 1 ist insbesondere zur Herstellung eines in der Fig. 3 gezeigten Kabelbaums 3 geeignet. Hierzu sind in dem Verbundschlauch 1, insbesondere in einem Innenraum I des Verbundschlauchs 1, eine Vielzahl an Kabeln 4 bis 6 aufgenommen. Die Kabel 4 bis 6 füllen vorzugsweise den gesamten Innenraum I aus. Die Kabel 4 bis 6 können als Leitungen bezeichnet werden. Die Anzahl der Kabel 4 bis 6 ist beliebig. Die Kabel 4 bis 6 können identische oder, wie in der Fig. 3 gezeigt, unterschiedliche Durchmesser und/oder Querschnitte aufweisen. Die Kabel 4 bis 6 bilden zusammen mit dem Verbundschlauch 1 den Kabelbaum 3.

Der Kabelbaum 3 beziehungsweise der Verbundschlauch 1 findet bevorzugt im Bereich der Kraftfahrzeugtechnik Anwendung. Der Kabelbaum 3 beziehungsweise der Verbundschlauch 1 kann allerdings auch in jedem anderen Bereich eingesetzt werden. Die Kabel 4 bis 6 können elektrische Kabel, beispielsweise einphasige Kabel, mehrphasige Kabel, Koaxialkabel oder dergleichen, oder Fluidleitungen, wie beispielsweise Benzin-, Diesel-, Kerosin-, Hydraulik- oder Pneumatikleitungen sein. Die Kabel 4 bis 6 verlaufen in der Längsrichtung L.

Der Verbundschlauch 1 umfasst sich in der Längsrichtung L abwechselnde Wellentäler 7 und Wellenberge 8, von denen in den Fig. 1 und 2 jeweils nur zwei mit einem Bezugszeichen versehen sind. Die Wellentäler 7 und die Wellenberge 8 sind so angeordnet, dass jeweils zwischen zwei Wellentälern 7 ein Wellenberg 8 und zwischen zwei Wellenbergen 8 ein Wellental 7 angeordnet ist. Die Wellentäler 7 und die Wellenberge 8 sind sowohl außenseitig als auch innenseitig, das heißt dem Innenraum I zugewandt, an dem Verbundschlauch 1 vorgesehen. Beispielsweise können die Wellentäler 7 und die Wellenberge 8 nach einem Extrudieren des Verbundschlauchs 1 mit Hilfe eines sogenannten Corrugators an den Verbundschlauch 1 angeformt werden. Der Verbundschlauch 1 weist an den Wellentälern 7 einen Innendurchmesser d7 und an den Wellenbergen 8 einen Außendurchmesser d8 auf. Der Außendurchmesser d8 ist größer als der Innendurchmesser d7.

Wie die Fig. 3 zeigt, ist der Verbundschlauch 1 zumindest an den Wellenbergen 8 außenseitig mit einer Wellung 9 versehen. Die Wellung 9 läuft in der Umfangsrichtung U vollständig um den Verbundschlauch 1 um. Die Wellung 9 wird dadurch gebildet, dass erste Wandabschnitte 10 und zweite Wandabschnitte 11 abwechselnd in der Umfangsrichtung U nebeneinander angeordnet sind. Die ersten Wandabschnitte 10 erstrecken sich dabei in der Radialrichtung R über die zweiten Wandabschnitte 11 heraus. Das heißt, die zweiten Wandabschnitte 11 sind bezüglich der ersten Wandabschnitte 10 in der Radialrichtung R zurückgesetzt.

Vorzugsweise ist eine beliebige Anzahl an ersten Wandabschnitten 10 und an zweiten Wandabschnitten 11 vorgesehen, die in der Umfangsrichtung U abwechselnd angeordnet und gleichmäßig verteilt sind. Die Anzahl der ersten Wandabschnitte 10 entspricht dabei der Anzahl der zweiten Wandabschnitte 11. Beispielsweise sind zwölf erste Wandabschnitte 10 und zwölf zweite Wandabschnitte 11 vorgesehen. Die Wellung 9 ist vorzugsweise nur im Bereich der Wellenberge 8 und nicht im Bereich der Wellentäler 7 vorgesehen.

Die ersten Wandabschnitte 10 sind aus einem ersten Kunststoffmaterial gefertigt und die zweiten Wandabschnitte 11 sind aus einem sich von dem ersten Kunststoffmaterial unterscheidenden zweiten Kunststoffmaterial gefertigt. Insbesondere ist das zweite Kunststoffmaterial weicher als das erste Kunststoffmaterial.

Das zweite Kunststoffmaterial kann beispielsweise eine Shore-A-Härte in einem Bereich von bevorzugt 10 bis 70 aufweisen und das erste Kunststoffmaterial kann eine Shore-D-Härte in einem Bereich von bevorzugt 40 bis 90 aufweisen. Das erste Kunststoffmaterial kann beispielsweise ein Polyamid (PA) und das zweite Kunststoffmaterial kann beispielsweise ein thermoplastisches Elastomer (TPE), insbesondere ein thermoplastisches Polyurethan (TPU), oder ein Ethylen-Tetrafluorethylen-Copolymer (ETFE) sein. Insbesondere sind das erste Kunststoffmaterial und das zweite Kunststoffmaterial unmischbar oder zumindest schlecht mischbar. Weiterhin sind das erste Kunststoffmaterial und das zweite Kunststoffmaterial ungeeignet, miteinander eine Bindung einzugehen.

Zum Verbinden der ersten Wandabschnitte 10 mit den zweiten Wandabschnitten 11 ist eine Vielzahl an dritten Wandabschnitten 12 vorgesehen, die aus einem sich von dem ersten Kunststoffmaterial und dem zweiten Kunststoffmaterial unterscheidenden dritten Kunststoffmaterial gefertigt sind. Die dritten Wandabschnitte 12 sind so angeordnet, dass jeder erste Wandabschnitt 10 und jeder zweite Wandabschnitt 11 jeweils zwischen zwei dritten Wandabschnitten 12 angeordnet ist. Die Anzahl der dritten Wandabschnitte 12 ist vorzugsweise doppelt so groß wie die Anzahl der ersten Wandabschnitte 10 oder die Anzahl der zweiten Wandabschnitte 11. Beispielsweise sind vierundzwanzig derartige dritte Wandabschnitte 12 vorgesehen.

In der Umfangsrichtung U sind jeweils abwechselnd ein erster Wandabschnitt 10, ein zweiter Wandabschnitt 11 und ein dritter Wandabschnitt 12 nebeneinander angeordnet, wobei der dritte Wandabschnitt 12 zwischen dem ersten Wandabschnitt 10 und dem zweiten Wandabschnitt 11 angeordnet ist und als Haftvermittler zwischen dem ersten Kunststoffmaterial und dem zweiten Kunststoffmaterial fungiert. Das dritte Kunststoffmaterial ist vorzugsweise ein modifiziertes Polyolefin. Zur Herstellung eines modifizierten Polyolefins kann ein Polyolefin so modifiziert werden, dass dieses vorher unlösliche Polyolefin in organischen Lösungsmitteln löslich ist.

Die ersten Wandabschnitte 10, die zweiten Wandabschnitte 11 und die dritten Wandabschnitte 12 erstrecken sich in der Längsrichtung L und sind parallel zueinander angeordnet. Insbesondere verlaufen die ersten Wandabschnitte 10, die zweiten Wandabschnitte 11 und die dritten Wandabschnitte 12 parallel zu der Symmetrieachse M1. Die ersten Wandabschnitte 10, die zweiten Wandabschnitte 11 und die dritten Wandabschnitte 12 erstrecken sich in der Radialrichtung R über eine gesamte Wandstärke W des Verbundschlauchs 1. Hierunter ist zu verstehen, dass in der Radialrichtung R betrachtet die ersten Wandabschnitte 10 nur mit dem ersten Kunststoffmaterial gebildet sind, die zweiten Wandabschnitte 11 nur mit dem zweiten Kunststoffmaterial gebildet sind und die dritten Wandabschnitte 12 nur mit dem dritten Kunststoffmaterial gebildet sind. Insbesondere heißt dies auch, dass das erste Kunststoffmaterial, das zweite Kunststoffmaterial und das dritte Kunststoffmaterial in der Radialrichtung R betrachtet nicht übereinander, sondern in der Umfangsrichtung U betrachtet ausschließlich nebeneinander angeordnet sind.

Darunter, dass sich die ersten Wandabschnitte 10, die zweiten Wandabschnitte 11 und die dritten Wandabschnitte 12 in der Radialrichtung R betrachtet jeweils über die gesamte Wandstärke W des Verbundschlauchs 1 erstrecken, kann jedoch auch zu verstehen sein, dass in der Radialrichtung R betrachtet eine sehr dünne, insbesondere folienartige Schicht, des dritten Kunststoffmaterials auf und/oder unter dem zweiten Kunststoffmaterial und/oder auf und/oder unter dem ersten Kunststoffmaterial angeordnet ist. Das heißt, in der Radialrichtung R betrachtet können die dritten Wandabschnitte 12 zumindest abschnittsweise über und/oder unter den ersten Wandabschnitten 10 und/oder über und/oder unter den zweiten Wandabschnitten 11 angeordnet sein. Fertigungstechnisch ist es möglich, dass sich diese sehr dünne Schicht des dritten Kunststoffmaterials bildet. Der dritte Wandabschnitt 12 kann dann im Querschnitt eine T-förmige oder eine doppel-T-förmige beziehungsweise I-förmige Geometrie aufweisen.

Jeder zweite Wandabschnitt 11 weist in der Radialrichtung R betrachtet vorzugsweise eine Breite b11 auf. Die zweiten Wandabschnitte 11 können im Querschnitt vieleckig sein. Die zweiten Wandabschnitte 11 können im Querschnitt jedoch eine beliebige Geometrie aufweisen. Beispielsweise können die zweiten Wandabschnitte 11 auch zickzackförmig sein. Jeder dritte Wandabschnitt 12 weist in der Radialrichtung R betrachtet vorzugsweise wie die zweiten Wandabschnitte 11 ebenfalls eine Breite b12 auf. Die dritten Wandabschnitte 12 können im Querschnitt vieleckig sein. Die dritten Wandabschnitte 12 können im Querschnitt jedoch eine beliebige Geometrie aufweisen. In der Radialrichtung R betrachtet weisen die ersten Wandabschnitte 10 vorzugsweise eine keilförmige Geometrie auf. Seitenkanten jedes ersten Wandabschnitts 10 können dabei in einem Winkel α zueinander geneigt sein. Das heißt, ein jeweiliger Querschnitt der ersten Wandabschnitte 10 vergrößert sich ausgehend von der Symmetrieachse M1 in der Radialrichtung R betrachtet.

Mit Hilfe der aus dem dritten Kunststoffmaterial gefertigten dritten Wandabschnitte 12 können die chemisch nicht verbindbaren ersten Wandabschnitte 10 mit den zweiten Wandabschnitten 11 verbunden werden. Insbesondere können auch mehr als die drei zuvor beschriebenen Wandabschnitte 10 bis 12 vorgesehen sein, so dass mehr als drei unterschiedliche Kunststoffmaterialien verbunden werden können.

Zum Fertigen des Verbundschlauchs 1 wird beispielsweise das erste Kunststoffmaterial der ersten Wandabschnitte 10 mit Hilfe eines Hauptextruders extrudiert. Das zweite Kunststoffmaterial der zweiten Wandabschnitte 11 wird dem Hauptextruder mit Hilfe eines ersten Beispritzextruders zugeführt und das dritte Kunststoffmaterial der dritten Wandabschnitte 12 wird dem Hauptextruder mit Hilfe eines zweiten Beispritzextruders zugeführt. Falls weitere Kunststoffmaterialien oder Komponenten hinzugefügt werden, kann ein weiterer Beispritzextruder vorgesehen werden. Die Kunststoffmaterialien, die mit Hilfe der Beispritzextruder zugeführt werden, können in einem Spritzkopf direkt in einen Schmelzefluss des ersten Kunststoffmaterials eingespritzt werden.

Der Verbundschlauch 1 ist aufgrund der in der Umfangsrichtung U gleichmäßig verteilten, flexibel verformbaren zweiten Wandabschnitte 11 sehr flexibel ohne dass diese Flexibilität von den aus dem härteren ersten Kunststoffmaterial gefertigten ersten Wandabschnitten 10 beeinflusst wird. Insbesondere können die zweiten Wandabschnitte 11, die aus dem weicheren zweiten Kunststoffmaterial gefertigt sind, ganz gezielt im Hinblick auf die gewünschte Flexibilität des Verbundschlauchs 1 gewählt und ausgelegt werden.

Demgegenüber sind die aus dem härteren ersten Kunststoffmaterial gefertigten ersten Wandabschnitte 10, welche in der Radialrichtung R über die zweiten Wandabschnitte 11 hervorspringen, für Reibprozesse zuständig, welche durch bewegte, an ihnen anliegende Flächen ausgelöst werden, wobei diese im Hinblick auf die gewünschten Reibeigenschaften sowie die Abriebfestigkeit ebenfalls gezielt durch eine geeignete Materialauswahl ausgelegt werden können, ohne dass diese auf die Eigenschaften der zweiten Wandabschnitte 11, die eine geringere Härte aufweisen, Einfluss nehmen.

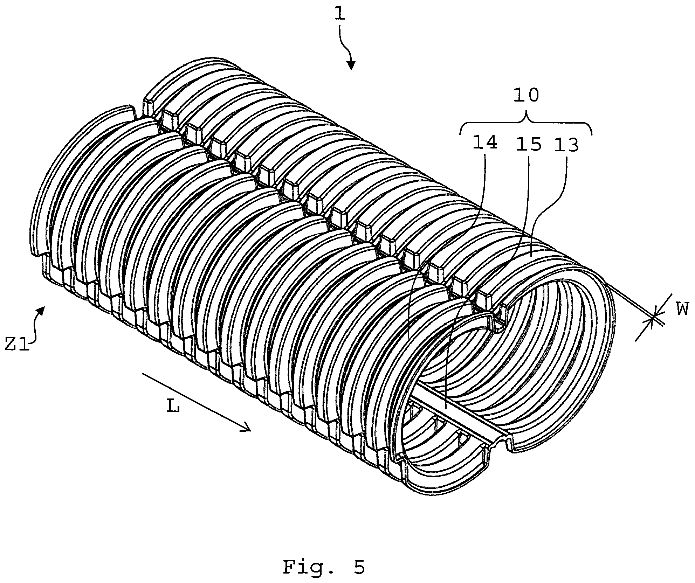

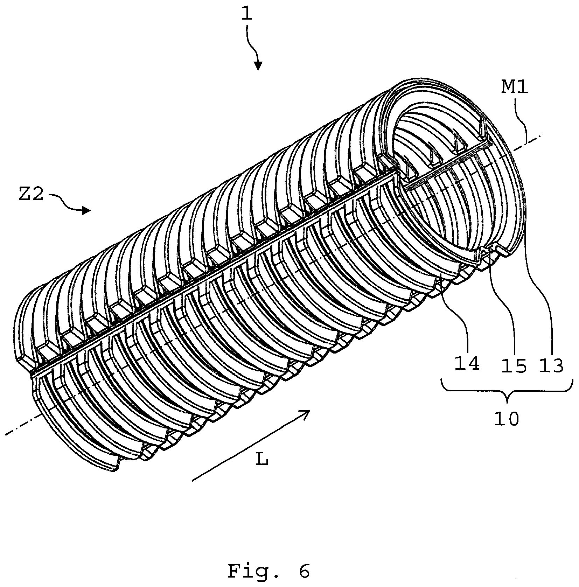

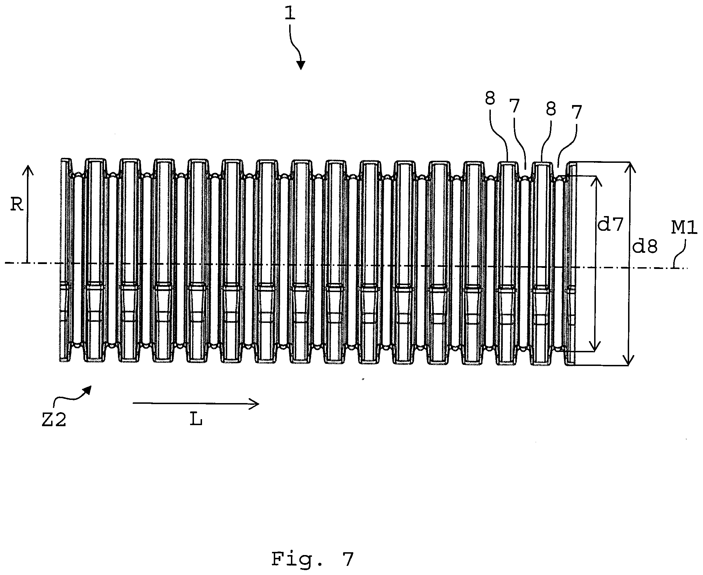

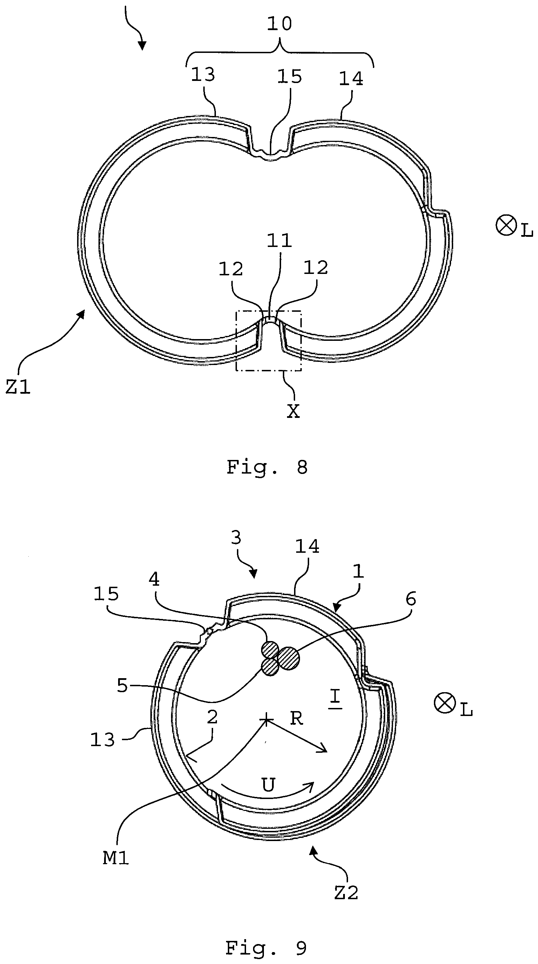

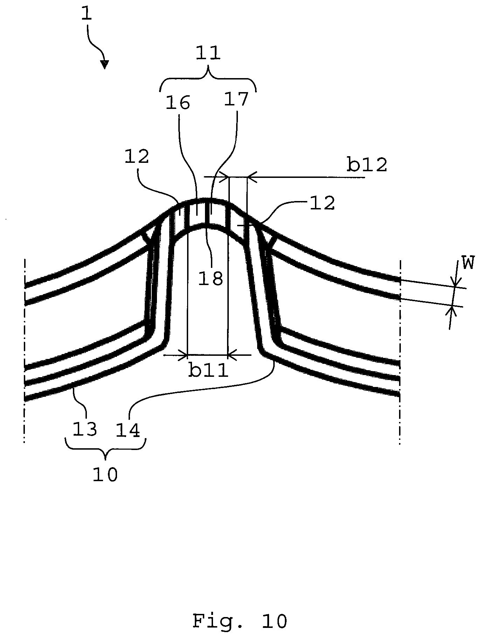

Die Fig. 5 und 6 zeigen jeweils eine schematische perspektivische Ansicht einer weiteren Ausführungsform eines Verbundschlauchs 1. Die Fig. 7 zeigt eine schematische Seitenansicht des Verbundschlauchs 1, die Fig. 8 und 9 zeigen jeweils eine schematische Vorderansicht des Verbundschlauchs 1 und die Fig. 10 zeigt die Detailansicht X gemäß der Fig. 8. Im Folgenden wird auf die Fig. 5 bis 10 gleichzeitig Bezug genommen.

Der Verbundschlauch 1 gemäß den Fig. 5 bis 10 unterscheidet sich von dem Verbundschlauch 1 gemäß den Fig. 1 bis 4 dadurch, dass der Verbundschlauch 1 gemäß den Fig. 5 bis 10 keine Wellung 9 aufweist und dass der Verbundschlauch 1 gemäß den Fig. 5 bis 10 zum Bilden des Kabelbaums 3 von einem in den Fig. 5 und 8 gezeigten geöffneten oder aufgeklappten Zustand Z1 in einen in den Fig. 6, 7 und 9 gezeigten geschlossenen oder zusammengeklappten Zustand Z2 verbringbar ist. Hierzu weist der Verbundschlauch 1 eine erste Wellschlauchschale 13, eine zweite Wellschlauchschale 14 und einen Gelenkabschnitt 15 auf, an dem die erste Wellschlauchschale 13 und die zweite Wellschlauchschale 14 verschwenkbar miteinander verbunden sind.

Die Wellschlauchschalen 13, 14 weisen in der Längsrichtung L abwechselnd angeordnete Wellentäler 7 und Wellenberge 8 auf. Der Gelenkabschnitt 15 ist frei von Wellentälern 7 und Wellenbergen 8. Das heißt, der Gelenkabschnitt 15 ist glatt und nicht gewellt. Die erste Wellschlauchschale 13, die zweite Wellschlauchschale 14 und der Gelenkabschnitt 15 sind materialeinstückig ausgebildet. Insbesondere bilden die erste Wellschlauchschale 13, die zweite Wellflachschale 14 und der Gelenkabschnitt 15 einen ersten Wandabschnitt 10 des Verbundschlauchs, der aus dem zuvor erwähnten ersten Kunststoffmaterial gefertigt ist.

Alternativ kann der Gelenkabschnitt 15 auch aus einem anderen Kunststoffmaterial gefertigt sein als die Wellschlauchschalen 13, 14. Beispielsweise können die Wellschlauchschalen 13, 14 aus dem ersten Kunststoffmaterial und der Gelenkabschnitt 15 kann aus dem zweiten Kunststoffmaterial gefertigt sein. Der Gelenkabschnitt 15 ist dann ein zweiter Wandabschnitt 11 des Verbundschlauchs 1. Zwischen dem Gelenkabschnitt 15 und den Wellschlauchschalen 13, 14 kann dann jeweils ein dritter Wandabschnitt 12 vorgesehen sein, der aus dem dritten Kunststoffmaterial gefertigt ist und der den Gelenkabschnitt 15 mit den Wellschlauchschalen 13, 14 verbindet.

Zum Bilden eines in der Fig. 9 gezeigten Kabelbaums 3 werden in dem aufgeklappten Zustand Z1 Kabel 4 bis 6 in den Verbundschlauch 1 eingelegt, und dieser wird von dem aufgeklappten Zustand Z1 in den zusammengeklappten Zustand Z2 verbracht, wobei hierbei die zweite Wellschlauchschale 14 zumindest abschnittsweise innerhalb der ersten Wellschlauchschale 13 angeordnet wird Bei dem Verbringen des Verbundschlauchs 1 von dem aufgeklappten Zustand Z1 in den zusammengeklappten Zustand Z2 verschwenken die Wellschlauchschalen 13, 14 um den Gelenkabschnitt 15.

Weiterhin umfasst der Verbundschlauch 1 einen zweiten Wandabschnitt 11, der eine elastisch verformbare Verschlusslippe des Verbundschlauchs 1 bildet. Der zweite Wandabschnitt 11 ist aus dem sich von dem ersten Kunststoffmaterial unterscheidenden zweiten Kunststoffmaterial gefertigt. Der zweite Wandabschnitt 11 weist einen an der ersten Wellschlauchschale 13 vorgesehenen ersten Lippenabschnitt 16 und einen von dem ersten Lippenabschnitt 16 getrennten zweiten Lippenabschnitt 17 auf, der an der zweiten Wellschlauchschale 14 vorgsehen ist.

Darunter, dass der erste Lippenabschnitt 16 von dem zweiten Lippenabschnitt 17 getrennt ist, ist zu verstehen, dass zwischen dem ersten Lippenabschnitt 16 und dem zweiten Lippenabschnitt 17 ein Schnitt oder Schlitz 18 vorgesehen ist. Der Schlitz 18 erstreckt sich entlang der Längsrichtung L. Alternativ kann auch an nur einer der Wellschlauchschalen 13, 14 ein derartiger Lippenabschnitt 16, 17 vorgesehen sein.

Zwischen der ersten Wellschlauchschale 13 und dem ersten Lippenabschnitt 16 ist ein dritter Wandabschnitt 12 vorgesehen, der aus dem sich von dem ersten Kunststoffmaterial und dem zweiten Kunststoffmaterial unterscheidenden dritten Kunststoffmaterial gefertigt ist. Zwischen dem zweiten Lippenabschnitt 17 und der zweiten Wellschlauchschale 14 ist ebenfalls ein derartiger dritter Wandabschnitt 12 vorgesehen. Die Anordnung und die Funktionalität der Wandabschnitte 10 bis 12 entsprechen der Anordnung und der Funktionalität der Wandabschnitte 10 bis 12 des Verbundschlauchs 1 gemäß den Fig. 1 bis 4.

Obwohl die vorliegende Erfindung anhand von Ausführungsbeispielen beschrieben wurde, ist sie vielfältig modifizierbar.

### BEZUGSZEICHENLISTE

- 1: Verbundschlauch
- 2: Innenwandung
- 3: Kabelbaum
- 4: Kabel
- 5: Kabel
- 6: Kabel
- 7: Wellental
- 8: Wellenberg
- 9: Wellung
- 10: Wandabschnitt
- 11: Wandabschnitt
- 12: Wandabschnitt
- 13: Wellschlauchschale
- 14: Wellschlauchschale
- 15: Gelenkabschnitt
- 16: Lippenabschnitt
- 17: Lippenabschnitt
- 18: Schlitz

- b11: Breite
- b12: Breite
- d7: Innendurchmesser
- d8: Außendurchmesser
- I: Innenraum
- L: Längsrichtung
- M1: Symmetrieachse
- R: Radialrichtung
- U: Umfangsrichtung
- W: Wandstärke
- Z1: Zustand
- Z2: Zustand
- α: Winkel

## Patentansprüche

1. Verbundschlauch (1), insbesondere Wellschlauch, mit einem ersten Wandabschnitt (10), der aus einem ersten Kunststoffmaterial gefertigt ist, einem zweiten Wandabschnitt (11), der aus einem sich von dem ersten Kunststoffmaterial unterscheidenden zweiten Kunststoffmaterial gefertigt ist, und einem dritten Wandabschnitt (12), der aus einem sich von dem ersten Kunststoffmaterial und dem zweiten Kunststoffmaterial unterscheidenden dritten Kunststoffmaterial gefertigt ist, wobei der erste Wandabschnitt (10), der zweite Wandabschnitt (11) und der dritte Wandabschnitt (12) in einer Umfangsrichtung (U) des Verbundschlauchs (1) nebeneinander angeordnet sind, wobei der dritte Wandabschnitt (12) zwischen dem ersten Wandabschnitt (10) und dem zweiten Wandabschnitt (11) angeordnet ist und den ersten Wandabschnitt (10) mit dem zweiten Wandabschnitt (11) verbindet, und wobei sich der erste Wandabschnitt (10), der zweite Wandabschnitt (11) und der dritte Wandabschnitt (12) in einer Radialrichtung (R) des Verbundschlauchs (1) jeweils über eine gesamte Wandstärke (W) desselben erstrecken.

2. Verbundschlauch nach Anspruch 1, ferner umfassend eine Vielzahl an ersten Wandabschnitten (10), zweiten Wandabschnitten (11) und dritten Wandabschnitten (12), wobei jeder erste Wandabschnitt (10) zwischen zwei dritten Wandabschnitten (12) sowie jeder zweite Wandabschnitt (11) zwischen zwei dritten Wandabschnitten (12) angeordnet ist.

3. Verbundschlauch nach Anspruch 1 oder 2, wobei sich der erste Wandabschnitt (10), der zweite Wandabschnitt (11) und der dritte Wandabschnitt (12) in einer Längsrichtung (L) des Verbundschlauchs (1) erstrecken und parallel zueinander angeordnet sind.

4. Verbundschlauch nach einem der Ansprüche 1 - 3, wobei das zweite Kunststoffmaterial sich von dem ersten Kunststoffmaterial unterscheidende Eigenschaften aufweist.

5. Verbundschlauch nach einem der Ansprüche 1 - 4, wobei das dritte Kunststoffmaterial als Haftvermittler zwischen dem ersten Kunststoffmaterial und dem zweiten Kunststoffmaterial fungiert.

6. Verbundschlauch nach einem der Ansprüche 1 - 5, wobei das erste Kunststoffmaterial ein Polyamid, das zweite Kunststoffmaterial ein thermoplastisches Elastomer oder ein Ethylen-Tetrafluorethylen-Copolymer und das dritte Kunststoffmaterial ein modifiziertes Polyolefin ist.

7. Verbundschlauch nach einem der Ansprüche 1 - 6, ferner umfassend sich in einer Längsrichtung (L) des Verbundschlauchs (1) abwechselnde Wellentäler (7) und Wellenberge (8).

8. Verbundschlauch nach einem der Ansprüche 1 - 7, wobei sich der erste Wandabschnitt (10) in der Radialrichtung (R) über den zweiten Wandabschnitt (11) herauserstreckt.

9. Verbundschlauch nach einem der Ansprüche 1 - 8, wobei der erste Wandabschnitt (10) eine erste Wellschlauchschale (13), eine zweite Wellschlauchschale (14) und einen Gelenkabschnitt (15) aufweist, an dem die erste Wellschlauchschale (13) und die zweite Wellschlauchschale (14) verschwenkbar miteinander verbunden sind, und wobei der zweite Wandabschnitt (11) eine elastisch verformbare Verschlusslippe bildet.

10. Verbundschlauch nach Anspruch 9, wobei der zweite Wandabschnitt (11) einen an der ersten Wellschlauchschale (13) vorgesehenen ersten Lippenabschnitt (16) und einen von dem ersten Lippenabschnitt (16) getrennten zweiten Lippenabschnitt (17) aufweist, der an der zweiten Wellschlauchschale (14) vorgesehen ist.

## Claims

1. Composite tube (1), in particular corrugated tube, comprising a first wall section (10) produced from a first plastic material, a second wall section (11) produced from a second plastic material different from the first plastic material, and a third wall section (12) produced from a third plastic material different from the first plastic material and the second plastic material, the first wall section (10), the second wall section (11), and the third wall section (12) being adjacently arranged in a peripheral direction (U) of the composite tube (1), the third wall section (12) being arranged between the first wall section (10) and the second wall section (11) and connecting the first wall section (10) to the second wall section (11), and the first wall section (10), the second wall section (11), and the third wall section (12) respectively extending in a radial direction (R) of the composite tube (1) over an entire wall thickness (W) thereof.

2. Composite tube according to claim 1, furthermore comprising a plurality of first wall sections (10), second wall sections (11), and third wall sections (12), wherein each first wall section (10) is arranged between two third wall sections (12) and each second wall section (11) is arranged between two third wall sections (12).

3. Composite tube according to claim 1 or 2, wherein the first wall section (10), the second wall section (11), and the third wall section (12) extend in a longitudinal direction (L) of the composite tube (1) and are arranged in parallel to one another.

4. Composite tube according to one of claims 1 to 3, wherein the second plastic material has properties different from the first plastic material.

5. Composite tube according to one of claims 1 to 4, wherein the third plastic material acts as a bonding agent between the first plastic material and the second plastic material.

6. Composite tube according to one of claims 1 to 5, wherein the first plastic material is a polyamide, the second plastic material is a thermoplastic elastomer or an ethylene tetrafluoroethylene copolymer, and the third plastic material is a modified polyolefin.

7. Composite tube according to one of claims 1 to 6, further comprising wave valleys (7) and wave crests (8) alternating in a longitudinal direction (L) of the composite tube (1).

8. Composite tube according to one of claims 1 to 7, wherein the first wall section (10) extends in the radial direction (R) beyond the second wall section (11).

9. Composite tube according to one of claims 1 to 8, wherein the first wall section (10) has a first corrugated tube shell (13), a second corrugated tube shell (14), and a joint section (15) at which the first corrugated tube shell (13) and the second corrugated tube shell (14) are pivotably connected to one another, and wherein the second wall section (11) forms an elastically deformable sealing lip.

10. Composite tube according to claim 9, wherein the second wall section (11) has a first lip section (16) provided on the first corrugated tube shell (13) and a second lip section (17) which is separate from the first lip section (16) and provided on the second corrugated tube shell (14).

## Revendications

1. Tuyau composite (1), en particulier tuyau annelé, avec une première section de paroi (10) constituée d'un premier matériau plastique, d'une deuxième section de paroi (11) constituée d'un deuxième matériau plastique se différenciant du premier matériau plastique, et d'une troisième section de paroi (12) constituée d'un troisième matériau plastique se différenciant du premier matériau plastique et du deuxième matériau plastique, la première section de paroi (10), la deuxième section de paroi (11) et la troisième section de paroi (12) étant disposées côte à côte dans une direction circonférentielle (U) du tuyau composite (1), la troisième section de paroi (12) étant disposée entre la première section de paroi (10) et la deuxième section de paroi (11) et reliant la première section de paroi (10) à la deuxième section de paroi (11), et dans lequel la première section de paroi (10), la deuxième section de paroi (11) et la troisième section de paroi (12) s'étendent chacune dans une direction radiale (R ) du tuyau composite (1), sur toute une épaisseur de paroi (W) de celui-ci.

2. Tuyau composite selon la revendication 1, comprenant en outre une multiplicité de premières sections de paroi (10), de deuxièmes sections de paroi (11) et de troisièmes sections de paroi (12), dans lequel chaque première section de paroi (10) est disposée entre deux troisièmes sections de paroi (12) et chaque deuxième section de paroi (11) entre deux troisièmes sections de paroi (12).

3. Tuyau composite selon la revendication 1 ou 2, dans lequel la première section de paroi (10), la deuxième section de paroi (11) et la troisième section de paroi (12) s'étendent dans une direction longitudinale (L) du tuyau composite (1) et sont disposées parallèlement les unes aux autres.

4. Tuyau composite selon l'une des revendications 1 à 3, dans lequel le deuxième matériau plastique présente des propriétés se différenciant de celles du premier matériau plastique.

5. Tuyau composite selon l'une des revendications 1 à 4, dans lequel le troisième matériau plastique fonctionne comme agent liant entre le premier matériau plastique et le deuxième matériau plastique.

6. Tuyau composition selon l'une des revendications 1 à 5, dans lequel le premier matériau plastique est un polyamide, le deuxième matériau plastique est un élastomère thermoplastique ou un copolymère éthylène-tétrafluoroéthylène et le troisième matériau plastique est une polyoléfine modifiée.

7. Tuyau composition selon l'une des revendications 1 à 6, comprenant en outre des concavités (7) et des convexités (8) s'étendant dans une direction longitudinale (L) du tuyau composite (1).

8. Tuyau composite selon l'une des revendications 1 à 7, dans lequel la première section de paroi (10) fait saillie dans la direction radiale (R) par rapport à la deuxième section de paroi (11).

9. Tuyau composite selon l'une des revendications 1 à 8, dans lequel la première section de paroi (10) présente une première coque de tuyau annelé (13), une deuxième coque de tuyau annelé (14) et une section articulée (15) à laquelle la première coque de tuyau annelé (13) et la deuxième coque de tuyau annelé (14) sont articulées ensemble de manière pivotable et dans lequel la deuxième section de paroi (11) forme une lèvre de fermeture déformable élastiquement.

10. Tuyau composite selon la revendication 9, dans lequel la deuxième section de paroi (11) présente une première section à lèvre (16) prévue sur la première coque de tuyau annelé (13) et, séparée de la première section à lèvre (16), une deuxième section à lèvre (17) prévue sur la deuxième coque de tuyau annelé (14).
